# EUROPEAN PATENT APPLICATION

(11) **EP 2 001 204 A1**
(43) Date of publication of application: **10.12.2008**
(21) Application number: 08157795.9
(22) Date of filing: 06.06.2008
(51) Int. Cl.: H04L 29/12

(54) **Determining connectivity between endpoints in a network**

(30) Priority: 08.06.2007 US 760476
(71) Applicant: Avaya Technology Corp., Basking Ridge, NJ 07920 (US)
(72) Inventor: Cooper, Eric, Kanata Ontario K2K 1W1 (CA); Matthews, Philip, Ottawa Ontario K0A 3M0 (CA)
(74) Representative: Williams, David John

(57) **Abstract**

A method of determining connectivity between two endpoints in a communications network is described. The method includes identifying transport addresses associated with each of the two endpoints and determining pairs of the transport addresses identifying a transmission path between the two endpoints. The method then proceeds to determining, at each endpoint, which of the pairs of transport addresses identifies a unique transmission path; and then performing connectivity checks at each endpoint for each pair identifying a unique transmission path.

## Description

### Field of the Invention

The present invention relates to the field of networks and communications and more particularly to determining connectivity (or reducing connectivity checks) between two endpoints in a network when attempting to establish a connection.

### Background

Determining connectivity between endpoints in a network particularly in the presence of firewalls and Network Address Translation (NAT) type devices pose challenges. Typically, a NAT hides the network topology from an external entity. Specifically, NAT devices separate an internal network from the broader Internet through the use of a separate address space in the internal network. NATs dynamically translate between these address spaces for each network connection.

Various protocols/schemes have been proposed to improve the determination of a transmission path between two endpoints (also termed hosts, peers, nodes and the like) in a network in the presence of intervening NATs. ICE (Interactive Connectivity Establishment) is one example of a proposed protocol and provides a basis for generalized NAT traversal that is currently an extension of the Session Description Protocol (SDP). The ICE protocol is versatile but early versions of ICE used more messages than was necessary when determining connectivity.

### Summary

Certain exemplary embodiments of the present invention can provide a method of determining connectivity between two endpoints in a communications network, the method comprising: identifying transport addresses associated with each of the two endpoints; determining pairs of the transport addresses identifying a transmission path between the two endpoints; determining, at each endpoint, which of the pairs of transport addresses identifies a unique transmission path; and performing connectivity checks at each endpoint for each pair identifying a unique transmission path.

Certain exemplary embodiments of the present invention can provide a method of reducing connectivity checks between two endpoints in a communications network, the method comprising: identifying candidates for each endpoint, each endpoint classifying candidates for that endpoint as being either a base candidate or a non-base candidate; determining pairs of the candidates that delimit a transmission path between the two endpoints; developing, at each endpoint, a list of connectivity checks to be performed for each pair; and filtering, at each endpoint, the list for that endpoint to suppress performance of connectivity checks for all pairs including a non-base candidate for that endpoint.

Certain exemplary embodiments of the present invention can provide a method of reducing connectivity checks between two endpoints in a communications network, the method comprising: identifying candidates for each endpoint, each endpoint classifying candidates for that endpoint as being either a base candidate or a non-base candidate; determining, at each endpoint, a corresponding base candidate for each non-base candidates; determining pairs of the candidates that delimit a transmission path between the two endpoints; developing, at each endpoint, a list of connectivity checks to be performed for each pair; examining, at each endpoint, each pair and corresponding base candidate for non-base candidates to determine if a connectivity check for a pair corresponding to corresponding base candidates of the examined pair has already been performed; performing a connectivity check for the examined pair if no connectivity check has been performed for a pair corresponding to corresponding base candidates of the examined pair has been performed; and suppressing performance of a connectivity check for the pair if a connectivity check for a pair corresponding to corresponding base candidates of the examined pair has been performed.

Certain exemplary embodiments of the present invention can provide a method of determining connectivity between two endpoints in a communications network, the method comprising: identifying transport addresses associated with each of the two endpoints; determining, at each endpoint, pairs of the transport addresses identifying a transmission path between the two endpoints, each pair including a transport address associated that endpoint from which messages can originate; and performing connectivity checks at each endpoint for each pair identifying a unique transmission path.

Certain exemplary embodiments of the present invention can provide a method of checking connectivity between two endpoints in a communications network, the method comprising: identifying candidates for each endpoint, each endpoint classifying candidates for that endpoint as being either a base candidate or a non-base candidate; determining, at each endpoint, pairs of the candidates that delimit a transmission path between the two endpoints, each pair including a base candidate from that endpoint; developing, at each endpoint, a list of connectivity checks to be performed for each pair; and performing for each endpoint connectivity checks for all pairs including a non-base candidate for that endpoint.

### Brief Description of the Drawings

Fig. 1 illustrates a schematic representation of an example network for illustrating how the connectivity between two hosts can be determined according to an embodiment of the present invention;
Fig. 2 illustrates a flow chart of a method of determining connectivity according to an embodiment of the present invention;
Fig. 3 illustrates a flow chart of a method of reducing connectivity checks according to another embodiment of the present invention; and
Fig. 4 illustrates a flow chart of a method of determining connectivity according to another embodiment of the present invention.

### Detailed, Description

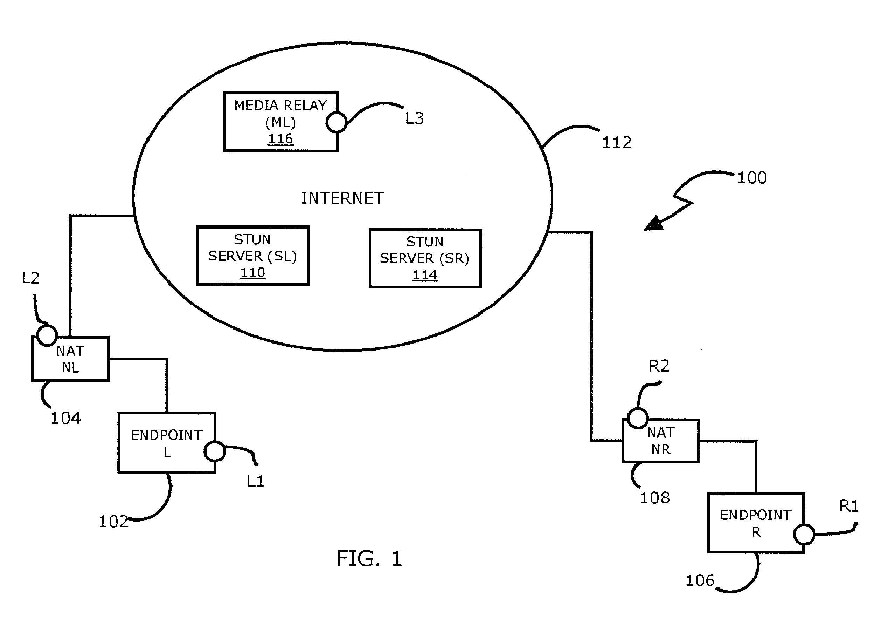

Fig. 1 illustrates a schematic representation of an exemplary network 100. A first endpoint (L) 102 (host, peer, node, etc.) is arranged behind a NAT-NL 104. A second endpoint (R) 106 is arranged behind a NAT-NR 108. The endpoint 102 has access to an addressable server (SL) 110 in the Internet 112. The endpoint 104 has access to an addressable server (SR) 114 also in the Internet 112. A media relay (ML) device 116 is located in the Internet 112 and may be associated with the endpoint 102.

The servers 110 and 114 can be a STUN server (Simple Traversal of UDP (User Datagram Protocol) through NATs) also referred to as (Session Traversal Utilities for NAT). Refer to the Internet Engineering Task Force (IETF) RFC 3489 document titled *"STUN-Simple Traversal of User Datagram Protocol (UDP) Through Network Address Translators (NATs)",* incorporated herein by reference, from "http://www.ietf.org/rfc/rfc3489,txt" on 07-June-2007 for further details of STUN and NATs.

Although the endpoints 12 and 16 each require the use of a server to establish a connection between each other: the server can be separate (as shown) or one server can handle both endpoints. Further, the server need not be public (i.e., accessible to the entire Internet) and need not be in the globally routable address space. In particular, a server can be in private address space and multiple servers can be located in different address spaces.

Each of the endpoints 102/106 has one or more associated transport addresses. A transport address is defined as IP address together with additional information (e.g., a UDP or TCP port number), where UDP is the User Datagram Protocol and TCP is the Transmission Control Protocol.

There are various mechanisms by which an endpoint may learn of an associated transport address. The STUN approach referenced above provides one such mechanism. Other mechanisms can also be used.

The association of transport addresses with endpoints may result from other devices on the network 100, such as the NATs 104/108 and the relay device 116, assigning at least one transport address to each endpoint 102/106 for use in communication through the device. Each endpoint 102/106 learns about these transport addresses associated with it through various known processes. The transport addresses are either ones from which messages can originate or ones from which messages cannot originate. Any transport addresses from which message originate have corresponding transport addresses from which messages can originate.

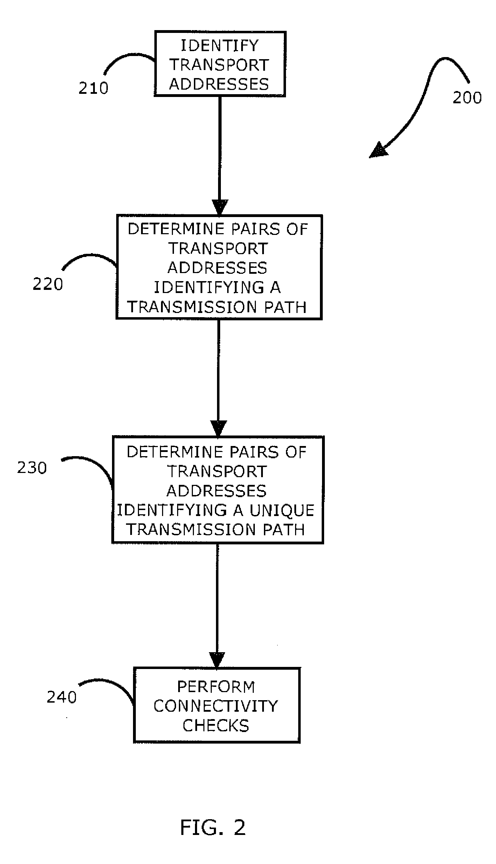

Fig. 2 illustrates a flow chart of a method 200 of determining connectivity between the two endpoints 102 and 106 in the network 100 according to an embodiment. The method 200 includes identifying the transport addresses that are associated with each endpoint 102/106 at step 210. Pairs of transport addresses identifying a possible transmission path between the two endpoints 102/106 are determined at step 220. Pairs are formed with one member of the pair being from a local transport address and the other member of the pair being from a remote transport address. A transmission path (or channel) is a path between two nodes (e.g., transport addresses) of a network over which data communications can follow.

At each endpoint 102/106, pairs of transport addresses that identify a unique transmission path are determined at step 230, These pairs of transport addresses are the two endpoints that delimit transmission paths. A unique transmission path is either a transmission path for which a previous connectivity determination has not been made, or a transmission path in which the transport address for the endpoint examining the pairs is one from which messages can originate. A transmission path is effectively the same as another transmission path from the perspective of the endpoint when the transport address for that endpoint in the path is one from which a message cannot originate (the same transmission path being from the corresponding transport address from which a message can originate).

Connectivity checks are performed at step 240 at each endpoint 102/106 for each transport address pair defining a unique transmission path identified in step 230. A connectivity check between pairs of transport addresses is a packet exchange between the pair of transport addresses for the purpose of determining whether the remote transport address can be reached from the local transport address.

Step 210 can include discovering the transport addresses associated with each endpoint 102/106 and providing from each endpoint to the other endpoint information on the transport address associated with that endpoint. This exchange of transport addresses between the two endpoints may occur by each endpoint providing the other endpoint with a list of its transport addresses. This list may be of all transport addresses associated with the endpoint, or only a subset of all such transport addresses. Specifically, endpoint 102 is made aware of the transport addresses associated with endpoint 106 and visa versa.

Step 230 can include deriving, at each endpoint 102/106, a set of transport addresses associated with that endpoint from which messages can originate and then determining, at each endpoint, a set of the pairs of transport addresses that include a transport address from the derived set for that endpoint. The pairs in the set identify a unique transmission path.

The steps of the method 200 are performed separately and independently by each endpoint 102/106.

A transport address can be further used to form candidates that comprise the transport address together with additional related information (e.g., user name, password, etc.). Not all transport addresses will form candidates as will be subsequently described. Candidates are further categorized as either base candidates or non-base candidates. A base candidate is generally defined as a transport address from which messages can originate. A non-base candidate is generally defined as a transport address that intervenes between a base candidate and another transport address. As such each non-base candidate has a corresponding base candidate.

Examples of types of candidates are summarized below:
(1) Host candidate (base candidate): a transport address that is allocated from an operating system residing on a local device. In particular, the host candidate combines an address assigned to the local host with a locally allocated port number. In the example of Fig. 1, L1 and R1 are host candidates.
(2) Relay candidate (base candidate): a transport address on a media relay. Packets sent to a relay candidate are forwarded to a host located behind a NAT. In the example of Fig. 1, ML is a media relay and L3 is a candidate on ML that is termed the media candidate.
(3) Reflexive candidate (non-base candidate): a transport address that is allocated by a NAT to correspond to a host candidate. Packets sent to the reflexive candidate are forwarded by the NAT to the corresponding host candidate. Reflexive candidates can be further classified as "server-reflexive" or "peer-reflexive" to indicate how they are discovered. In the example of Fig. 1, L2 and R2 are server-reflexive candidates (a peer-reflexive candidate is not shown).

A connectivity check example is shown in Table 1-A and is discussed below.

**TABLE 1-A**

| CANDIDATE PAIR | CHECK FROM L(12)TO R (16) | COMMENTS | CHECK FROM R (16) TO L (12) | COMMENTS |
|---|---|---|---|---|
| (L1,R1) | C1: L1->R1 | Good check | C5: L1<-R1 | Good check |
| (L1,R2) | C2: L1->R2 | Good check | C6: L1<-R2 | Redundant - duplicate of C5: L1<-R1 |
| (L2,R1) | C3: L2->R1 | Redundant-duplicate of C1:L1->R1 | C7: L2<-R1 | Good check |
| (L2,R2) | C4: L2->R2 | Redundant-duplicate of C2: L1->R2 | C8: L2<-R2 | Redundant-duplicate of C7: L2<-R1 |

The checks are labeled "Cn", where n=1 to 8. The direction of the check between candidates is illustrated with notations "->" and "<-", L1 and R1 are base candidates and L2 and R2 are non-base candidates. Note that L1, L2, R1 and R2 can also be considered transport addresses and the checks would be equally applicable. L3 is not a part of this example.

As illustrated in Table 1-A, checks C3 and C4 that originate from non-base candidate L2 are duplicates of the checks C1 and C2 that originate from base candidate L1, Similarly, checks C6 and C8 that originate from non-base candidate R2 are duplicates of checks C5 5 and C7 that originate from base candidate R1,

By suppressing/filtering/eliminating the duplicate checks C3, C4, C6 and C8 the number of messages that need to be exchanged between the endpoints 12 and 16 are reduced by 50% (from 8 checks to 4 checks) in this example. Further, by reducing the number of checks the remaining checks (C1, C2, C5, and C7) can start earlier (i.e., due to fewer delays between the start of successive checks) thereby improving the speed and efficiency of establishing the connection between the endpoints 12 and 16. In particular, since the checks can be sequentially performed, reducing the checks also reduces the time required to perform the checks thereby improving connectivity check performance.

Redundant connectivity checks exist when some of the candidates are server-reflexive or peer-reflexive candidates (non-base candidates). The redundancy exists, from a network topology point-of-view, because sending a message from a non-base candidate is the same as sending a message from the candidate from which it was derived (i.e., its corresponding base candidate). Therefore, messages sent from non-base candidates are not useful as they do not check for new network paths.

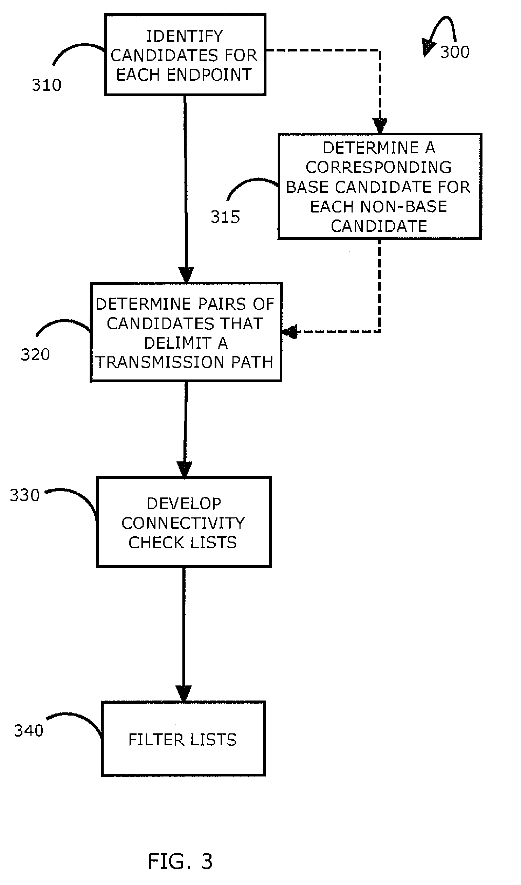

Fig. 3 illustrates a flow chart of a method 300 of reducing connectivity checks between the two endpoints 102 and 106 according to an embodiment. The method 300 includes identifying the candidates (classified as either base or non-base candidates as described above) for each endpoint 102/106 at step 310. The candidates for each endpoint 102/106 can be transport addresses that are advertised to be associated with the respective endpoint. That is, it is possible that not all transport addresses will form candidates,

An optional step 315 includes determining, at each endpoint 102/106, a corresponding base candidate for each non-base candidate. Pairs of the candidates that identify or delimit transmission paths between the two endpoints 1021106 are then determined at step 320. As a further option to step 320, the pairs of candidates formed by an endpoint may be assembled so that each pair includes a base candidate from that endpoint 102/106. At each endpoint 102/106 a list of connectivity checks to be performed for each pair is established at step 330 (see checks C1-C8 in Table 1-A as an example). The list of connectivity checks (at each endpoint 102/106) is filtered at each endpoint at step 340 to suppress the execution of connectivity checks for all candidate pairs that include a non-base candidate for that endpoint.

Step 310 can include discovering candidates associated with each endpoint 102/106 and providing from one endpoint to the other endpoint information on the candidates associated with that endpoint, Therefore, endpoint 102 is aware of the candidates associated with endpoint 106 and visa versa.

The filtering step 340 may be accomplished in a number of ways. For example, each endpoint creates a set of the pairs of candidates in which one candidate from the pair is a non-base candidate for the endpoint creating the set. This set can then be used to either modify the list of connectivity checks for the endpoint creating the set to remove any connectivity checks for pairs in the set. Alternatively, the set may be used by the endpoint to develop a filter to suppress connectivity checks for pairs from the set. This filter can then be applied to the list for the endpoint creating the set and then connectivity checks can be performed on the filtered list.

Another option for the filtering step 340 involves each endpoint examining each pair of candidates and corresponding base candidate for any non-base candidates for that end point in the pairs. The pairs are examined according to their corresponding base candidates to determine if a connectivity check has been performed for any pair that has the same corresponding base candidates. As an endpoint is aware of its own classification of its own candidates as base or non-base, the endpoint examines its own candidates in the pairs but may not make a judgment about the candidate from another endpoint. A connectivity check for a pair is performed at the endpoint if no connectivity check has been performed for a pair with corresponding base candidates. If a connectivity check for a pair with corresponding base candidates has already been performed by endpoint, then the connectivity check of the pair being examined is suppressed by the endpoint.

The steps of the method 300 are performed separately and independently by each endpoint 102/106.

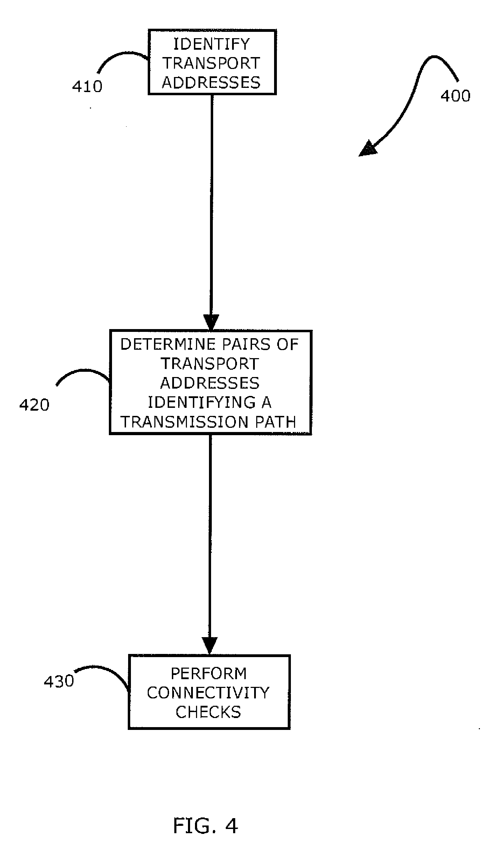

Fig. 4 illustrates a flow chart of a method 400 of determining connectivity between the two endpoints 102 and 106 in the network 100 according to an embodiment, The method 400 includes identifying the transport addresses that are associated with each endpoint 102/106 at step 410. Pairs of transport addresses identifying a transmission path between the two endpoints 102/106 are determined at step 420, Each pair includes a transport address associated with that endpoint from which messages can originate. Thus, the only pairs that are formed are those that create a unique transmission path. Connectivity checks are performed at step 430 at each endpoint 102/106 for pair thereby defining a unique transmission path.

Step 410 can include discovering the transport addresses associated with each endpoint 102/106 and providing from each endpoint to each other endpoint information on the transport address associated with that endpoint. It is then determined, for each endpoint, which transport addresses associated with that endpoint messages can originate from,

The steps of the method 400 are performed separately and independently by each endpoint 102/106.

## Claims

1. A method of determining connectivity between two endpoints in a communications network, the method comprising:
identifying transport addresses associated with each of the two endpoints;
determining pairs of the transport addresses identifying a transmission path between the two endpoints;
determining, at each endpoint, which of the pairs of transport addresses identifies a unique transmission path; and
performing connectivity checks at each endpoint for each pair identifying a unique transmission path.

2. The method of claim 1, the step of identifying transport addresses comprising:
discovering, at each endpoint, transport addresses associated with that endpoint; and
providing, from one of the endpoints to the other endpoint, information on the transport addresses associated with that endpoint.

3. The method of claim 1, the step of determining which of the pairs comprising:
deriving, at each endpoint, a set of transport addresses associated with that endpoint from which messages can originate; and
determining, at each endpoint, a set of the pairs of transport addresses that include a transport address from the derived set for that endpoint, the pairs in the set identifying a unique transmission path.

4. A method of reducing connectivity checks between two endpoints in a communications network, the method comprising:
identifying candidates for each endpoint, each endpoint classifying candidates for that endpoint as being either a base candidate or a non-base candidate;
determining pairs of the candidates that delimit a transmission path between the two endpoints;
developing, at each endpoint, a list of connectivity checks to be performed for each pair; and
filtering, at each endpoint, the list for that endpoint to suppress performance of connectivity checks for all pairs including a non-base candidate for that endpoint.

5. The method of claim 4 wherein the base candidate is a transport address from which messages can originate.

6. The method of claim 4, the step of identifying candidates comprising:
discovering, at each endpoint, candidates associated with that endpoint; and
providing, from one of the endpoints to the other endpoint, information on the candidates associated with that endpoint.

7. The method of claim 4, the step of filtering comprising:
determining, at each endpoint, a set of the pairs of candidates including a non-base candidate for that endpoint; and
removing, at each endpoint, connectivity checks for the pairs from the set from the list for that endpoint.

8. The method of 4, the step of filtering comprising:
determining, at each endpoint, a set of the pairs of candidates including a non-base candidate for that endpoint;
developing, at each endpoint, a filter to suppress connectivity checks for the pairs from the set for that endpoint;
applying, at each endpoint, the filter to the list for that endpoint; and
performing connectivity checks at each endpoint based on the filtered list.

9. The method of claim 4 wherein the candidates for each endpoint are transport addresses that are advertised to be associated with that endpoint.

10. A method of reducing connectivity checks between two endpoints in a communications network, the method comprising:
identifying candidates for each endpoint, each endpoint classifying candidates for that endpoint as being either a base candidate or a non-base candidate;
determining, at each endpoint, a corresponding base candidate for each non-base candidates;
determining pairs of the candidates that delimit a transmission path between the two endpoints;
developing, at each endpoint, a list of connectivity checks to be performed for each pair;
examining, at each endpoint, each pair and corresponding base candidate for non-base candidates to determine if a connectivity check for a pair corresponding to corresponding base candidates of the examined pair has already been performed;
performing a connectivity check for the examined pair if no connectivity check has been performed for a pair corresponding to corresponding base candidates of the examined pair has been performed; and
suppressing performance of a connectivity check for the pair if a connectivity check for a pair corresponding to corresponding base candidates of the examined pair has been performed.

11. The method of claim 10 wherein the base candidate is a transport address from which messages can originate.

12. The method of claim 10 wherein the candidates for each endpoint are transport addresses that are advertised to be associated with that endpoint.

13. A method of checking connectivity between two endpoints in a communications network, the method comprising:
identifying candidates for each endpoint, each endpoint classifying candidates for that endpoint as being either a base candidate or a non-base candidate;
determining, at each endpoint, pairs of the candidates that delimit a transmission path between the two endpoints, each pair including a base candidate from that endpoint;
developing, at each endpoint, a list of connectivity checks to be performed for each pair; and
performing for each endpoint connectivity checks for all pairs including a non-base candidate for that endpoint.

14. The method of claim 13, the step of identifying candidates comprising:
discovering, at each endpoint, candidates associated with that endpoint; and
providing, from one of the endpoints to the other endpoint, information on the candidates associated with that endpoint.

15. The method of 13 wherein the candidates for each endpoint are transport addresses that are advertised to be associated with that endpoint.
